Europäisches Patentamt

European Patent Office

Office européen des brevets

(11) Numéro de publication: **0 278 185 B1**

# (12) FASCICULE DE BREVET EUROPEEN

(45) Date de publication de fascicule du brevet: **04.03.92** (51) Int. Cl.⁵: **B23K 11/36**

(21) Numéro de dépôt: **87400305.6**

(22) Date de dépôt: **11.02.87**

(54) **Machine de soudage par résistance à commande numérique et système vis et écrou ou analogue; son mode de fonctionnement.**

(43) Date de publication de la demande:
**17.08.88 Bulletin 88/33**

(45) Mention de la délivrance du brevet:
**04.03.92 Bulletin 92/10**

(84) Etats contractants désignés:
**AT BE CH DE ES FR GB IT LI LU NL SE**

(56) Documents cités:
**DE-A- 3 515 833**
**FR-A- 1 455 212**
**US-A- 3 193 658**

(73) Titulaire: **A R O**
**1, avenue de Tours**
**F-72500 Château du Loir(FR)**

(72) Inventeur: **Lombard, Didier**
**7, rue du Président Kennedy**
**F-37540 Saint Cyr sur Loire(FR)**

(74) Mandataire: **Picard, Jean-Claude Georges et al**
**Cabinet Plasseraud 84, rue d'Amsterdam**
**F-75009 Paris(FR)**

## Description

La présente invention concerne un procédé de soudage avec une machine de soudage par résistance, du type comportant une tête comprenant deux organes de soudage propres à se déplacer l'un par rapport à l'autre et à enserrer entre eux les pièces à souder, l'un au moins étant, à cet effet, relié à des moyens moteurs, eux-mêmes connectés à des moyens de commande numériques propres à contrôler d'une part la vitesse d'approche relative desdits organes de soudage et d'autre part la force avec laquelle, en fonction du cycle de passage du courant électrique ou d'autres paramètres, ils enserrent lesdites pièces à souder, cette machine comportant en outre des moyens d'alimentation desdits organes de soudage en courant, ainsi que des moyens moteurs de type purement mécanique --à savoir à vis-écrou ou analogue- -entraînés par un moteur électrique.

Par l'expression "organes de soudage", on entend désigner soit des électrodes lorsqu'il s'agira d'une machine de soudage par points, soit ce que l'on appelle des "outillages", lorsqu'il s'agira d'une machine de soudage par bossage, les électrodes étant alors remplacées par des plateaux supportant les outillages de soudage. Dans ce dernier cas il s'agit de presses de soudage qui permettent ainsi, par l'utilisation d'outillages adéquats, le soudage par résistance d'une multitude de types de pièces, comme par exemple des pièces de formes diverses comportant un ou plusieurs bossages créés spécialement pour le soudage par résistance ou bien des tubes de différentes sections rondes ou autres destinés à être assemblés entre eux ou sur d'autres pièces selon une infinité de possibilités.

Quant aux moyens d'alimentation desdits organes de soudage en courant, ils pourront comprendre un transformateur de soudage abaisseur de tension, ou des condensateurs, dans le cas du microsoudage.

Les machines de soudage par résistance doivent, pour assurer un soudage correct, d'une part permettre la délivrance d'un courant très important entre deux organes de soudage et d'autre part appliquer ces deux organes de soudage de part et d'autre des deux pièces à souder avec un effort de l'ordre de plusieurs centaines de kg, cet effort devant être modulé en fonction du cycle de passage du courant électrique.

En particulier, on distingue les phases suivantes lors d'un cycle de soudage par résistance avec des électrodes, dans les cas les plus courants :
- lère phase : accostage. Les électrodes, qui étaient dans une position de retrait, sont rapprochées des pièces à souder jusqu'au contact.
- 2ème phase : mise en pression pour exercer l'effort.
- 3ème phase : passage du courant de soudage, pendant lequel les pièces à souder se ramollissent et s'écrasent un peu, les électrodes devant suivre le mouvement tout en continuant à exercer l'effort.
- 4ème phase : arrêt du courant de soudage, mais maintien d'un effort qui peut être le même ou légèrement plus faible ou plus fort, cette phase s'appelant le forgeage.
- 5ème phase : écartement des électrodes.

Ceci est un cycle classique. Il en existe de beaucoup plus complexes, mais dans tous les cas on note la nécessité d'une régulation de l'effort dont les exigences croissent avec les exigences de qualité de la soudure.

Tout ce qui vient d'être expliqué concernant le soudage par résistance avec deux électrodes s'applique également au cas du soudage par bossage (dit également soudage par projection) et d'une façon légèrement différente au cas du soudage à la molette.

Dans certaines des machines actuellement utilisées, l'effort de soudage est exercé par un vérin pneumatique, ou par l'action conjuguée de moyens à came et ressort, ou encore de moyens combinés pneumatiques et hydrauliques, mais il est plus avantageux d'utiliser, comme indiqué au début, des moyens moteurs de type purement mécanique --à savoir à vis-écrou ou analogue--entraînés par un moteur électrique.

L'utilisation de tels moyens moteurs a déjà été décrite dans le document US-A-3 193 658 et dans le document FR-A-1 455 212. Cependant, selon le document US la commande du moteur, et donc des déplacements des électrodes, en fonction de la pression de contact, s'effectue grâce à des moyens purement mécaniques, ne permettant aucune souplesse, et il n'y a pas de contrôle précis de vitesse. Selon le document français, il n'y a non plus aucune souplesse et aucune modification possible des paramètres de soudage en cours de fonctionnement, car on opère à partir d'un programme préétabli rigide, matérialisé sous la forme de cartes perforées.

Cet art antérieur - très ancien - n'est donc aucunement adapté aux exigences multiples et renforcées d'un soudage moderne.

La présente invention vise à combler ces lacunes et à cet effet le procédé de soudage avec une machine du type défini au début se caractérise en ce que, pour ce qui concerne le contrôle de la force appliquée par les électrodes sur les tôles à souder, lesdits moyens de commande numérique sont du type à fonctionnement en boucle fermée et sont agencés pour que l'effort soit régulé soit au travers d'un capteur d'efforts situé entre le moteur et la vis ou analogue, soit au niveau de l'application de l'effort lui-même.

Il peut également être avantageux, conformément à une autre disposition de l'invention, de prévoir, pour la phase d'accostage, un fonctionnement en boucle fermée desdits moyens de commande, un détecteur de position commandant le ralentissement jusqu'à l'impact à une vitesse désirée.

D'autres caractéristiques de l'invention seront vues plus bas, notamment en ce qui concerne la constitution de la commande électronique du moteur.

La commande électronique du moteur doit avoir certaines caractéristiques particulières pour cette application au soudage par résistance :

- possibilité de programmer le couple moteur en fonction de l'intensité afin de pouvoir programmer l'effort. Dans ce cas, cette programmation se ferait avec une approximation qui sera suffisante pour la plupart des problèmes courants, car elle sera déjà beaucoup plus précise que la programmation de l'effort en pneumatique. Pour des applications plus particulières, un capteur d'efforts angulaire ou linéaire peut être inclus dans la mécanique du système, une régulation en boucle fermée permettant alors davantage de précision ;
- possibilité de connaître la position du moteur. Ceci aura des avantages très importants et doit pouvoir être obtenu soit par un repérage électronique interne au moteur soit par l'adjonction d'un codeur de position, par exemple un codeur angulaire. On pourrait même penser dans certains cas à utiliser une règle inductosyn comme dans les machines outils à commande numérique de grande précision ; et
- possibilité de contrôler la vitesse afin de programmer des cycles d'approche de ralentissement et de travail permettant une régulation extrêmement fine des paramètres de soudage et des cadences de travail.

Les moyens de commande numériques du moteur seront avantageusement réunis dans un coffret électronique de commande permettant de combiner les paramètres de vitesse/position et effort, de façon à réaliser une soudure par résistance de qualité. Ce coffret électronique, en ce qui concerne lesdits paramètres, présentera de préférence les caractéristiques suivantes :

1) Vitesse

Approche rapide, choix de la vitesse.

En première approximation, la vitesse devrait permettre, en partant de l'arrêt, de parcourir 100 mm en une seconde. Les extrêmes se situent entre une demi-seconde et deux secondes.

Cette vitesse d'approche rapide doit pouvoir être programmée pour s'effectuer jusqu'à une certaine position à partir de laquelle la vitesse d'approche lente ou d'accostage prendra effet, après un ralentissement effectué selon une loi imposée par programmation.

Accostage

Il s'agit là de franchir quelques millimètres pour accoster les tôles à souder avec une vitesse d'impact aussi définie que possible. On peut envisager un fonctionnement en boucle ouverte, avec programmation soit d'une position d 'accostage, soit d'une vitesse lente après un ralentissement, mais il est préférable, comme indiqué plus haut, d'envisager un fonctionnement en boucle fermée, un détecteur de position commandant le ralentissement jusqu'à l'impact à une vitesse désirée.

Ce détecteur peut être optique, par exemple par capteur à fibre, pneumatique ou bien électromagnétique.

L'augmentation d'effort liée à l'accostage doit pouvoir être détectée afin de commander la suite du cycle.

Si après accostage un enfoncement continue à se produire, cela signifie que les tôles elles-mêmes n'étaient pas bien accostées. Il y a donc un défaut, qui doit être repérable et faire l'objet d'une alarme.

2) Position

La position doit être définie avec un incrément de l'ordre d'un centième de millimètre, afin de pouvoir contrôler le mouvement lors de l'exécution du point de soudure. Ceci est un ordre de grandeur.

La détection de position doit évidemment être immédiate, car la rapidité des phénomènes pendant le soudage ne permettrait pas de réagir suffisamment vite, si un retard était introduit dans le processus. L'étendue de mesure doit être de l'ordre de 100 mm en moyenne avec bien entendu d'importantes variations possibles selon les équipements.

3) Efforts

En ce qui concerne la programmation ou l'application de l'effort, on peut là encore envisager une version en boucle ouverte, dans laquelle l'effort est une fonction du courant qui passera dans le moteur, étant donc supposé que le rendement du système vis et écrou est connu et constant, mais on préfèrera la version plus performante spécifiée plus haut, dans laquelle l'effort peut être régulé en boucle fermée à travers un capteur d'efforts situé soit entre le moteur et la vis, soit, ce qui est encore préférable, au niveau de l'application de l'effort lui-même en extrémité de coulisseau.

Il faut noter que l'ensemble du système doit pouvoir être réversible soit mécaniquement dans le premier cas, soit grâce à la régulation dans le second, car le coulisseau doit pouvoir reculer pour accompagner une éventuelle dilatation lors du début du soudage avant l'effondrement du point.

L'ensemble de ces fonctions doit évidemment pouvoir être programmé, et surtout ceci doit pouvoir être fait en liaison avec un coffret de commande de séquence de soudage qui prendra en charge la commande du courant de soudage ainsi que la supervision de l'ensemble de la séquence incluant donc le pilotage de l'électronique de commande de la tête à commande numérique.

La commande électronique permettra, outre la commande du courant de soudage, un fonctionnement de la tête à commande numérique selon deux modes de base :

- Asservissement de couple au niveau du moteur, c'est-à-dire asservissement de force au niveau de la soudure, ce couple étant assujetti à une valeur de consigne et la vitesse s'adaptant en fonction de la résistance mécanique des pièces à souder.
- Asservissement de vitesse :
  C'est, dans ce cas, le couple qui s'adapte à cette résistance mécanique.

Dans les deux cas, bien entendu, des valeurs limites permettront de restreindre le domaine de fonctionnement.

Une possibilité de cycle simple peut, par exemple, consister à réaliser toute la phase d'approche en asservissement de vitesse puis, à l'accostage, à passer en asservissement de force.

L'invention permet aussi la programmation précise de combinaisons plus complexes entre le courant de soudage, l'effort de soudage et la position relative des électrodes, pièces ou outillages.

L'invention permet également d'utiliser des algorythmes plus ou moins complexes et connus de recherche de qualité de la soudure mais en les améliorant soit par la répétitivité des paramètres mécaniques soit en leur adjoignant des paramètres nouveaux, maintenant contrôlables, tels que l'effort, la position, la vitesse.

On peut ainsi envisager de combiner l'évolution de l'enfoncement de la soudure avec sa résistance électrique dynamique.

Des modes d'exécution de l'invention vont maintenant être décrits à titre d'exemples avec référence aux figures du dessin annexé, dans lequel :

- la figure 1 est une vue générale schématique d'une machine fixe de soudage par résistance conforme à la présente invention ;
- la figure 2 est une vue en coupe axiale, plus détaillée, de la partie de la tête de soudage qui porte l'électrode mobile, dans une machine fixe de soudage par points ;
- la figure 3 montre en coupe axiale une tête de soudage d'une machine conforme à l'invention, à commande numérique avec une pince à souder en C pour robotique ;
- la figure 4 est une vue générale schématique d'une machine de soudage par résistance à utilisation manuelle conforme à l'invention ;
- la figure 5 représente schématiquement un cycle de soudage simple, avec forgeage ;
- la figure 6 est un diagramme montrant un mode de fonctionnement de la machine selon lequel au déplacement pulsatoire $d$ de la tête de soudage est synchronisée une pulsation électrique du courant de soudage ;
- la figure 7 est un autre diagramme montrant un mode de fonctionnement de la machine permettant de tester la dureté du point de soudure pendant son exécution ;
- la figure 8 représente schématiquement une machine de soudage classique à vérin pneumatique à double course ; et
- la figure 9 représente schématiquement une machine conforme à la présente invention, montrant la possibilité de soudage successivement dans deux sens opposés sur une même pièce.

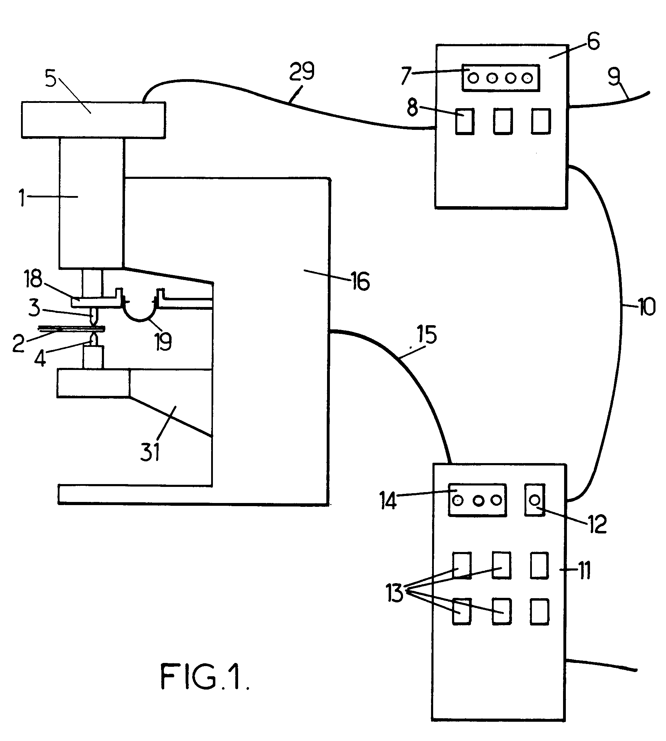

Sur la figure 1, on a représenté une machine fixe de soudage par résistance équipée d'une tête à commande numérique 1 ; dans ce cas, la machine est une machine de soudage par points ; on a d'ailleurs représenté en 2 les deux tôles à souder, qui sont pressées entre les électrodes, mobile 3 et fixe 4. La tête à commande numérique 1 est ici équipée d'un moteur 5 d'architecture plate, mais il pourrait s'agir d'un tout autre type de moteur présentant les mêmes performances. Le moteur 5 est commandé par un coffret de commande numérique de la tête de soudage, référencé en 6. Ce coffret permet une visualisation, en 7, des paramètres, et une programmation de ceux-ci, par les touches 8. Le coffret 6 est relié à une alimentation (non représentée) par un câble 9, et un câble de liaison de pilotage et de retour d'information 10 le relie à un coffret de commande 11 de la séquence de soudage.

Le coffret de commande 11 de la séquence de soudage est un type de coffret qui est couramment utilisé dans le soudage par résistance. Il permet d'une part de mettre en mémoire un certain nombre de programmes dont les paramètres seront ensuite automatiquement appliqués lorsque le programme sera appelé, par les touches 12. Ce coffret 11 permet également, par les touches 13, le réglage des paramètres d'intensité, de cyclage de l'effort ainsi qu'un certain nombre de fonctions de mesures ou de recours à des utilisations spécifiques permettant par exemple de prendre en compte l'usure d'électrode, de réaliser des cycles avec pulsations de courant, etc. Une visualisation de ces paramètres est représentée en 14. Le coffret comporte sa propre alimentation et alimente un étage de puissance qui lui-même commande le transformateur de soudage, par le câble 15, ce transformateur étant porté par le bâti 16 de la machine. Dans l'application avec la tête à commande numérique 1, le coffret de commande de la séquence de soudage 11 serait un coffret spécial dont la partie "commande de l'intensité" serait inchangée, mais qui serait différent en ce sens qu'il permettrait de piloter le coffret de commande numérique 6 de la tête de soudage 1 selon un cycle prédéterminé.

Le fonctionnement de la machine qui vient d'être décrite pourra être le suivant :

On suppose que les paramètres de soudage ont été réglés préalablement aux valeurs optimales et on s'intéresse à un fonctionnement régulier. La tension d'alimentation est appliquée aux divers organes de la machine, de même que les circulations d'eau de refroidissement sont établies dans les parties parcourues par le courant de soudage.

La tête de soudage 1 est en position haute.

L'opérateur appelle dans le coffret de commande 11 de la séquence de soudage le numéro du programme de soudage qu'il veut utiliser. Il appuie ensuite sur le ou les boutons de déclenchement du cycle, tout en ayant présenté préalablement les tôles à souder 2 (celles-ci peuvent être éventuellement présentées par un ensemble de manipulation automatique). Le coffret de commande numérique 6 commande la tête 1 qui effectue une descente rapide jusqu'à une position préprogrammée située à quelques millimètres des tôles à souder (on suppose ici qu'il n'y a pas de détecteur de la position de l'électrode 3 par rapport aux tôles 2).

Le coffret de commande numérique 6 de la tête 1 commande ensuite le passage en vitesse d'accostage, ce qui se fait après un ralentissement programmé. Les électrodes 3,4 arrivent alors au contact des tôles 2. L'effort programmé s'établit alors, car le coffret de commande numérique 6 injecte dans le moteur 5 de la tête 1 le courant correspondant à l'effort programmé. Pendant une courte période, il y a observation de l'immobilité de la tête. Si celle-ci bougeait, il y aurait diagnostic d'un défaut d'accostage qui pourrait par exemple amener l'opérateur à contrôler l'opération.

Tout étant correct, et l'effort établi à sa valeur programmée, l'information est transmise au coffret de commande 11 de la séquence de soudage, qui détermine alors l'intensité de soudage. Celle-ci s'établit à la valeur préréglée et, durant ce temps, la tête de soudage 1 continue, par l'intermédiaire du système à vis et écrou ou analogue, à appliquer un effort constant tout en suivant les micromouvements qui risquent de se produire : tout d'abord dilatation des tôles 2 imposant un léger retrait de la tête 1, puis ensuite effondrement du point de soudure, demandant un suivi de la part de la tête 1.

L'arrêt de l'intensité est commandé soit par le temps préprogrammé qui était introduit dans le coffret 11 de commande de la séquence, soit éventuellement par l'information provenant du coffret de commande numérique 6 de la tête de soudage, information pouvant venir d'un traitement effectué par un logiciel et concernant les mouvements de la tête 1 (on peut par exemple décider d'interrompre le soudage après un certain enfoncement).

L'interruption du courant de soudage peut également être faite d'une façon plus sophistiquée toujours par un logiciel prenant en compte non seulement la position, mais une combinaison de la position et de l'intensité, etc.

Le courant étant interrompu, la programmation impose ensuite une période de forgeage durant laquelle, dans le cas choisi, l'effort est augmenté d'une certaine valeur préprogrammée. Ce forgeage s'effectue donc, car le coffret de commande numérique 6 de la tête de soudage 1 a augmenté l'intensité dans le moteur de commande 5 d'une valeur adéquate, et, après un temps prédéterminé, l'information de remontée rapide est donnée au coffret de commande numérique 6 qui commande alors le moteur 5 de la tête à commande numérique 1 pour une remontée rapide. Celle-ci étant effectuée, l'opération de soudage est terminée.

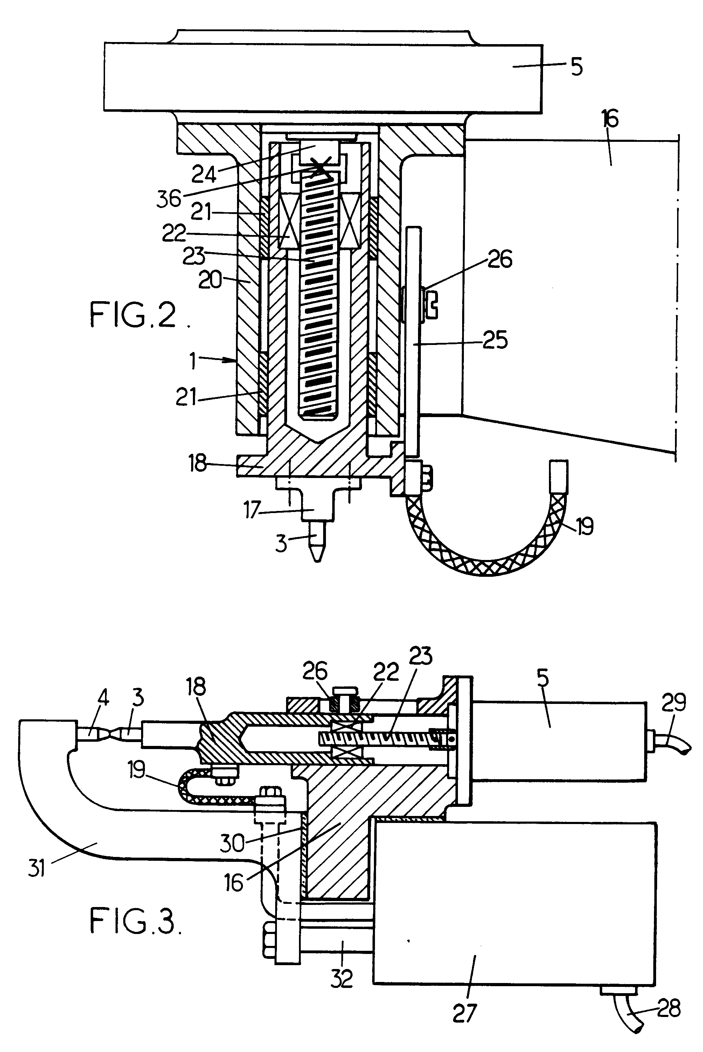

Sur la figure 2, on a montré le détail de réalisation de la tête à commande numérique 1. L'électrode mobile 3 est fixée à un porte-électrode 17 monté sur un coulisseau 18, lequel est relié au secondaire du transformateur de soudage par une liaison électrique souple 19. Ce coulisseau 18 est mobile axialement dans un support de coulisseau 20, par l'intermédiaire de manchons de guidage 21, et est solidaire d'un écrou 22 engagé sur une vis 23. Cette vis est accouplée, par un accouplement 36, à l'arbre de sortie 24 du moteur à commande numérique 5. Ainsi, il est clair que la rotation de l'arbre 24 et donc de la vis 23 entraînera l'écrou 22 et donc le coulisseau 18 et l'électrode 3 dans un mouvement de translation axial.

Il est à noter que le coulisseau 18 est aussi solidaire d'une règle anti-rotation 25 guidée entre deux galets, dont l'un est visible en 26.

Sur la figure 3, on a utilisé les mêmes références que sur la figure 2 pour représenter les mêmes éléments que sur cette figure, ou des éléments analogues.

En outre, on a référencé en 27 le transformateur de soudage, relié, par un câble 28 d'alimentation électrique, à l'armoire électronique de commande de soudage, 29 désignant le câble d'alimentation électrique du moteur 5 (voir également figure 1). Quant à la référence 30, elle représente une isolation entre le bâti 16 de la machine, utilisé pour la fixation sur le robot, et un bras fixe 31 portant l'électrode fixe 4, ce bras fixe étant relié au transformateur 27 par une liaison électrique 32.

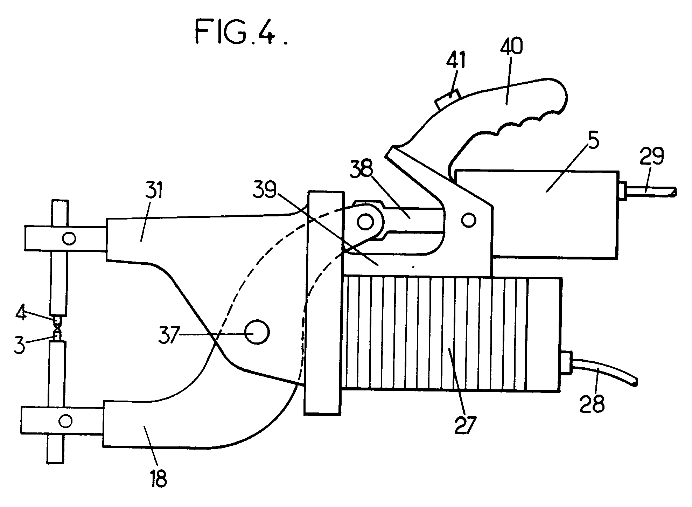

Sur la figure 4, on a utilisé les mêmes références numériques que sur les figures 2 et 3 pour représenter les mêmes éléments que sur ces figures, ou des éléments analogues.

En outre, le bras fixe 31 et le bras mobile 18 sont agencés pour former un C articulé autour d'un axe 37. Les électrodes 3 et 4 sont alors animées, l'une par rapport à l'autre, d'un mouvement relatif de rotation autour de l'axe 37. Le transformateur 27 est solidaire du bras fixe 31, tandis que l'extrémité libre du bras mobile 18 est reliée, à rotation, à une tige 38. Cette tige est déplaçable axialement et, à cette fin, est liée à la vis du système vis-écrou entraîné par le moteur 5 et à commande numérique ; ce moteur est supporté à rotation sur un bâti 39 qui est solidaire du bras fixe et qui est équipé d'une poignée 40 agencée pour porter la pince et pour commander celle-ci (bouton de commande 41).

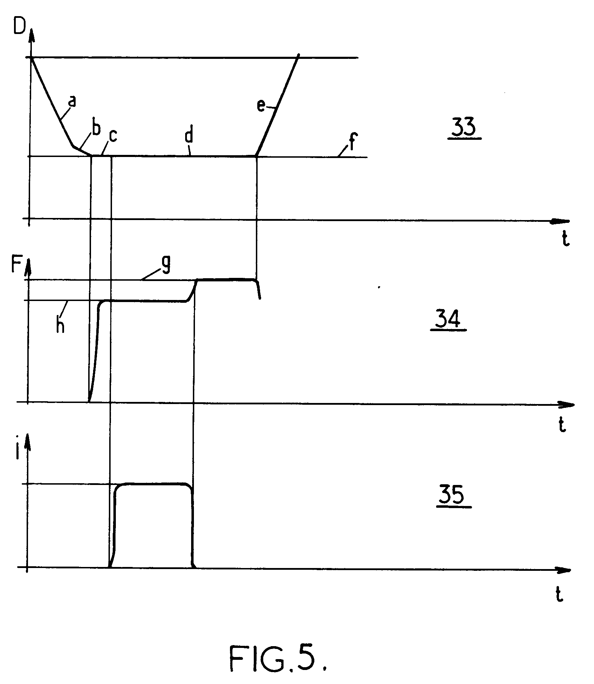

Sur la figure 5, on a représenté, en fonction du temps :

- en 33 l'évolution de la distance D de la tête mobile 3 par rapport aux tôles à souder 2. Sur cette figure, la partie a) désigne l'approche à vitesse rapide, la partie b) l'accostage à vitesse lente de l'électrode mobile 3, la partie c) la mise sous effort avec contrôle d'accostage, la partie d) les mises en mouvement pour l'accompagnement de la soudure pendant le soudage et le forgeage, et la partie e) la remontée rapide de l'électrode. La ligne horizontale f montre la position d'arrivée de l'électrode mobile 3 au contact de la tôle.
- 34 représente l'évolution de la force F des électrodes sur les tôles, en fonction du temps ; h désigne la position de soudage, et g la position de forgeage.
- enfin, 35 montre l'évolution de l'intensité de soudage i en fonction du temps.

L'invention permet d'appliquer de nouvelles méthodes de soudage par résistance dans lesquelles l'intensité pourrait, par exemple, être asservie à l'effort de soudage ou bien programmée en fonction de la position relative des pièces à souder.

L'invention permet d'envisager l'amélioration de la soudure par la modulation de l'effort de soudage. On peut ainsi envisager de superposer une vibration à celui-ci mais on peut aussi prévoir de synchroniser une pulsation mécanique de l'effort ou bien de l'avance de la tête à une pulsation électrique du courant de soudage afin d'exécuter par exemple des soudures par pénétration de très bonne qualité.

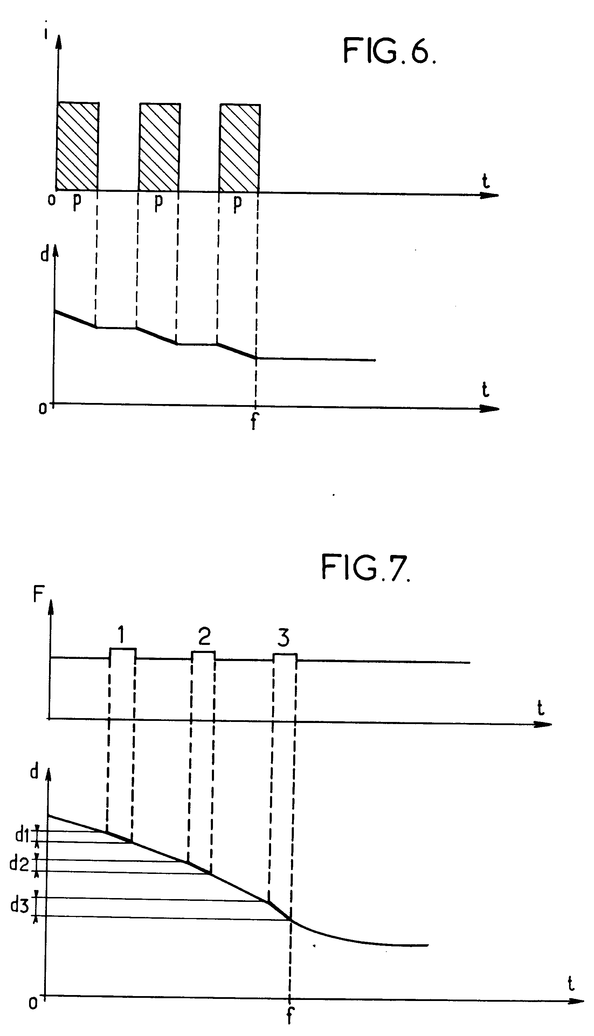

La figure 6 montre la forme et la durée relative possible de telles pulsations, ou périodes p de passage du courant i, le soudage commençant en o et finissant en f. Les pulsations mécaniques dues à l'accroissement de la pression sont représentées en ordonnées par les déplacements impulsionnels synchronisés d de la tête de soudage. Ce mode de fonctionnement synchronisé permet d'améliorer la qualité des soudures grâce aux périodes de refroidissement qui séparent les périodes p de passage du courant i, en faisant en sorte, en outre, de diminuer les déformations.

La fréquence des pulsations devant être supérieure à 1 Hz, on voit qu'il ne serait pas possible d'obtenir en pratique ces dispositions avec une machine à commande pneumatique.

La figure 7 montre un autre mode de fonctionnement caractérisé par une augmentation brutale mais relativement faible et déterminée de l'effort F de soudage, et par la mesure de l'enfoncement d consécutif de la pièce, le courant de soudage étant interrompu dès qu'un enfoncement prédéterminé est atteint.

Pour l'échelon 1 d'augmentation de l'effort de soudage l'enfoncement $d_1$ du métal est négligeable, ce qui signifie que le métal n'est pas notablement ramolli.

Pour l'échelon 2 l'enfoncement $d_2$ traduit un certain ramollissement.

Pour l'échelon 3 l'enfoncement est important et l'on arrête le soudage (en f).

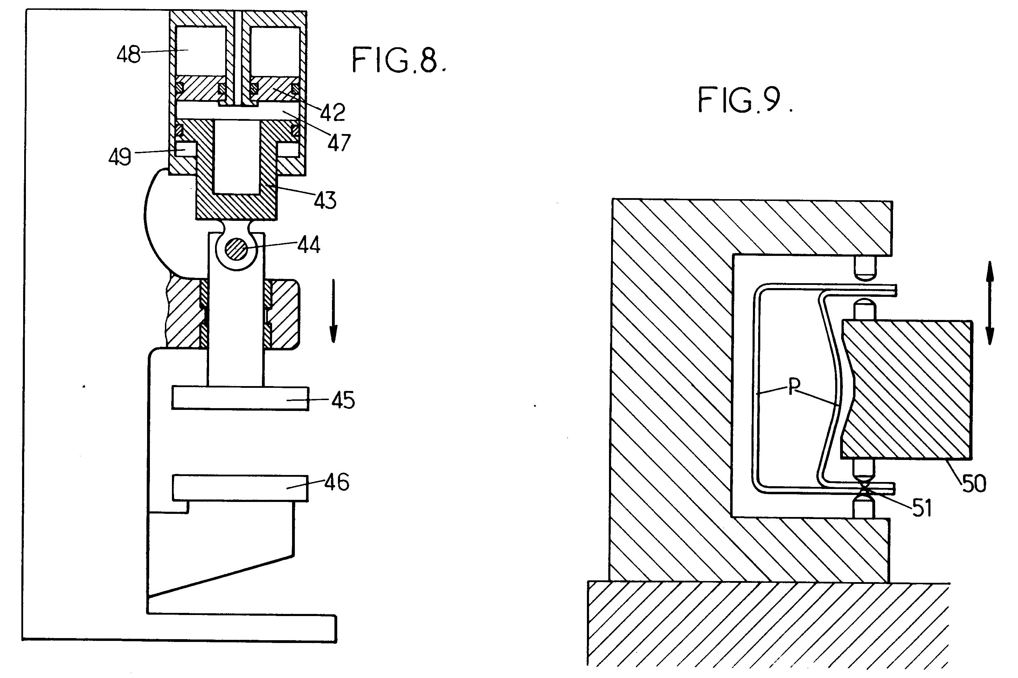

La machine classique représentée schématiquement à la figure 8 montre qu'avec une machine à vérin pneumatique à double course on ne peut obtenir qu'un seul sens de déplacement (déplacement de l'outillage vers le bas, comme représenté par la flèche). Sur cette figure on a référencé en 42 le piston d'approche, en 43 le piston de travail, en 44 la liaison à la tête de soudage, en 45 le plateau supérieur et en 46 le plateau inférieur. On voit que le piston d'approche 42 interdit une remontée complète lors d'une course de travail dans le sens de la remontée lorsque les chambres 48 et 49 sont alimentées, la section alors intéressée du piston de travail 43 étant inférieure à celle de la chambre intermédiaire 47. La remontée complète suppose que la chambre 49 est seule alimentée. On voit que la conception dissymétrique des moyens de commande pneumatique fait que les efforts produits par le vérin à la remontée ne peuvent être que plus faibles que les efforts produits à la descente (à pressions d'air égales), et que la course d'approche n'est pas possible à la remontée.

Au contraire, une particularité remarquable de l'invention est qu'elle permet de souder avec des paramètres identiques ou différents dans un sens d'approche de la tête et dans le sens contraire ; la tête à commande numérique est, en effet, entièrement symétrique dans son fonctionnement.

Sur la figure 9 on a schématisé cette caractéristique de l'invention.

Sur cette figure, la référence 50 désigne la tête qui, par un mouvement descendant, permet d'effectuer le point de soudage 51 sur les pièces à souder p. Le point de soudage en partie haute sera effectué après remontée de la tête 50. Celle-ci étant commandée par un système purement mécanique, on pourra obtenir exactement les mêmes vitesses, les mêmes efforts et d'une façon générale les mêmes caractéristiques de déplacement à la montée et à la descente.

Il est à noter également, en relation avec ce qui précède, qu'en utilisant une machine à deux têtes à commande numérique en opposition, on peut obtenir une machine dont le plan de soudage est variable et qui peut être programmé ou autocentrable si on lui adjoint un système adéquat de détection de pièces. Ceci peut permettre, dans certaines applications, d'augmenter les cadences en diminuant les temps de cycle ou de réglage.

L'invention présente les avantages suivants :
- le contrôle complet en grandeur et dans le temps de l'application des paramètres de soudage que sont la force exercée par les électrodes, leur position et leur vitesse.
- le contrôle de la position et de la vitesse permet une régulation des courses d'approche de travail et de la vitesse d'impact lors du serrage des tôles. Cette régulation permet de travailler aux cadences maximum, compte tenu des contraintes d'évacuation des pièces et de la sécurité.
- l'invention permet la programmation et la mémorisation de tous les paramètres de soudage : intensité, efforts, positions, vitesses. Ceci a l'avantage de réduire les temps de réglage entre des séries différentes et de supprimer la majorité des causes d'erreurs inhérentes aux changements de réglage.
- le contrôle de la vitesse d'impact, ce qui permet, en la limitant, de limiter l'écrasement et l'usure des électrodes, des pièces à souder ou des outillages ou bien, en la maintenant à une valeur élevée, d'utiliser tout autre phénomène susceptible par exemple d'améliorer le passage du courant.

La régulation de position permet de déclencher des phases de cycle en fonction de l'atteinte d'une position, par exemple lors de l'accostage (elle permettrait même éventuellement de détecter un mauvais accostage des tôles entre elles, si l'on peut détecter un enfoncement après un premier accostage). Cette régulation de position permet aussi de déclencher la fin du passage du courant après un certain écrasement de la soudure, ce qui est un procédé connu parfois utilisé pour certaines applications, mais qui nécessitait jusqu'à présent l'adjonction de capteurs linéaires à des têtes pneumatiques avec tous les inconvénients de fragilité que cela suppose et le manque de finesse de régulation.

La régulation de position permet également une mesure physique de l'écrasement des électrodes et donc d'une certaine façon de leur usure, ce qui devrait permettre une maintenance sur diagnostic. La régulation de vitesse permet de réguler la vitesse de descente durant l'écrasement du point, ce qu'aucun système ne permet de faire à l'heure actuelle et ce qui peut avoir des avantages énormes au niveau de la qualité et de la régularité de la soudure.

La régulation d'effort, par sa finesse, permet d'adapter celle-ci en fonction de sa position ou en fonction de la vitesse ou encore de tout autre paramètre caractéristique de la qualité de soudure recherchée.
- la connaissance précise de la position permet la mesure des flexions des bras de pinces ou des bâtis de machines entre le moment où le contact est établi entre les pièces ou les électrodes et les pièces et le moment où le couple est appliqué.

Ceci peut en particulier permettre de déclencher une alarme si la flexion sort des limites admises.
- l'augmentation de cadence déjà possible grâce à la programmation d'un fort ralentissement à l'impact découle également de l'absence d'éventuels rebondissements, de la programmation des courses de retour minimales et de la programmation des épaisseurs de pièces qui peuvent ainsi facilement être variables.

Il est à noter enfin que l'invention peut s'appliquer au soudage par résistance, en particulier dans les cas suivants :
- machine fixe pour soudage
  . par point,
  . par bossage (machine presse),
  . par molette.
- aux pinces à souder, soit utilisées à la main d'une architecture en C ou en X, soit montées sur un robot et ayant une architecture en C ou en X.
- aux ensembles de soudage par résistance destinés à être inclus dans des machines spéciales.

L'invention peut encore s'appliquer au soudage par étincelage, qui répond également à cette notion de combinaison de mouvements et d'efforts caractéristiques pour obtenir un soudage correct.

**Revendications**

1. Procédé de soudage avec une machine de soudage par résistance, du type comportant une tête (1) comprenant deux organes de soudage (3,4) propres à se déplacer l'un par rapport à l'autre et à enserrer entre eux les pièces à souder (2), l'un au moins (3) étant, à cet effet, relié à des moyens moteurs (5), eux-mêmes connectés à des moyens de commande numériques (6) propres à contrôler d'une part la vitesse d'approche relative desdits organes et d'autre part la force avec laquelle, en fonction du cycle de passage du courant électrique ou d'autres paramètres, ils enserrent lesdites pièces à souder, cette machine comportant en outre des moyens d'alimentation desdits organes en courant, tandis que lesdits moyens moteurs (5) sont de type purement mécanique --à savoir à système vis-écrou (22,23) ou analogue-- et sont entraînés par un moteur électrique (5), caractérisé en ce que, pour ce qui concerne le contrôle de la force appliquée par les électrodes sur les tôles à souder, lesdits moyens de commande numérique (6) sont du type à fonctionnement en boucle fermée et sont agencés pour que l'effort soit régulé soit au travers d'un capteur d'efforts situé entre le moteur et la vis ou analogue, soit au niveau de l'application de l'effort lui-même.

2. Procédé de soudage selon la revendication 1, caractérisé, pour la phase d'accostage, par un fonctionnement en boucle fermée desdits moyens de commande numérique (6), un détecteur de position commandant le ralentissement jusqu'a l'impact à une vitesse désirée.

3. Procédé de soudage selon la revendication 1 ou 2, caractérisé en ce que l'ensemble des fonctions de contrôle de force est programmé en liaison avec un coffret (11) de commande de séquence de soudage prenant en charge la commande du courant de soudage et la supervision de l'ensemble de la séquence incluant le pilotage de l'électronique de commande de la tête à commande numérique.

4. Procédé de soudage selon l'une quelconque des revendications précédentes, caractérisé par la mise en oeuvre d'une vibration ou d'une pulsation de l'effort de soudage ou du déplacement (d) de soudage, synchronisée avec des pulsations (i) du courant de soudage.

5. Procédé de soudage selon l'une quelconque des revendications précédentes, caractérisé par une augmentation brutale mais relativement faible et déterminée de l'effort (F) de soudage, et par la mesure de l'enfoncement (d) consécutif de la pièce, le courant de soudage étant interrompu dès qu'un enfoncement prédéterminé est atteint.

**Claims**

1. A welding process with a resistance welding machine of the kind comprising a head (1) having two welding elements (3, 4) movable relatively to one another and adapted to clamp between them the articles (2) to be welded, at least one welding element (3) being for this purpose connected to drive means (5) connected to digital control means (6) adapted to monitor the relative approach speed of the welding elements (3, 4) and the force with which they clamp the articles (2) to be welded in dependence upon the electricity flow cycle or upon other parameters, the machine also comprising means for supplying the welding elements (3, 4) with electricity, the driving means (5) being purely mechanical - viz. a screw and nut system (22, 23) or the like - and being driven by an electric motor (5), characterised in that for monitoring of the force applied by the electrodes to the metal articles to be welded, the digital control means (6) operate on the closed loop principle and are devised so that the force is controlled either by way of a force detector between the motor and the screw or the like or at the place where the force is applied.

2. A welding process according to claim 1, characterised in that in the squeezing phase the digital control means (6) operate on a closed loop basis, a position detector controlling deceleration up to impact at a required speed.

3. A welding process according to claim 1 or 2, characterised in that all the force-monitoring functions are controlled in association with a welding sequence control box (11) responsible for controlling the welding current and monitoring the entire sequence including piloting the control electronics of the digital control head.

4. A welding process according to any of the previous claims, characterised by the use of a vibration or a pulsation of the welding force or of the welding displacement (d) in synchronism with pulsations (i) of the welding current.

5. A welding process according to any of the previous claims, characterised by an abrupt but relatively reduced and predetermined increase in the welding force (F) and by measurement of the consecutive penetration (d) of the workpiece, the welding current being interrupted when a predetermined penetration has been achieved.

**Patentansprüche**

1. Verfahren zum Schweißen mit einer Widerstandsschweißmaschine des Typs, der einen Schweißkopf (1) mit zwei Schweißorganen (3,4), die in bezug zueinander bewegbar sind und die zu schweißenden Stücke (2) zwischen sich zusammendrücken können, zu welchem Zweck wenigstens eines (3) mit Antriebsmitteln (5) verbunden ist, die ihrerseits mit numerischen Steuermitteln (6) verbunden sind, die einerseits die relative Annäherungsgeschwindigkeit der beiden Organe und andererseits die Kraft, mit der sie in Abhängigkeit vom Stromflußzyklus oder von anderen Parametern die zu verschweißenden Stücke festklemmen, steuern können, aufweist, wobei die Maschine außerdem Stromversorgungsmittel für die Organe aufweist und die Antriebsmittel (5) vom rein mechanischen Typ sind - wie etwa mit einem Bolzen- und Mutter-System oder dergleichen - und mittels eines elektrischen Motors (5) angetrieben sind,
**dadurch gekennzeichnet,**
daß die numerischen Steuermittel (6) hinsichtlich der Steuerung der von den Elektroden an die zu verschweißenden Bleche angelegten Kraft von der Betriebsart mit geschlossener Regelschleife sind und daß sie so ausgelegt sind, daß die Kraft entweder mittels eines zwischen dem Motor und dem Bolzen oder dergleichen angeordneten Kraftsensors geregelt wird oder daß sie hinsichtlich des Anlegens der Kraft an sich geregelt wird.

2. Schweißverfahren nach Anspruch 1, für die Phase des Inpositionbringens **gekennzeichnet durch** einen Betrieb der numerischen Steuermittel (6) in geschlossener Schleife, wobei ein Positionssensor die Verzögerung bis zum Auftreffen mit einer vorgegebenen Geschwindigkeit steuert.

3. Schweißverfahren nach Anspruch 1 oder 2, **dadurch gekennzeichnet,**
daß die Gesamtheit der Kraftsteuerfunktionen in Verbindung mit einem Schweißsequenzsteuerschrank (11) programmiert wird, der die Steuerung des Schweißstroms und die Überwachung der Gesamtheit der Folge einschließlich der Steuerung der Steuerelektronik des numerisch gesteuerten Kopfes übernimmt.

4. Schweißverfahren nach einem der vorangehenden Ansprüche, **gekennzeichnet durch** das mit den Pulsierungen (i) des Schweißstromes synchronisierte Erzeugen einer Vibration oder eines Pulsierens der Schweißkraft oder der Schweißbewegung (d).

5. Schweißverfahren nach einem der vorangehenden Ansprüche, **gekennzeichnet durch** eine plötzliche, aber verhältnismäßig schwache und bestimmte Erhöhung der Schweißkraft (F) und durch den Schritt des daraufhin erfolgenden Eindrückens (d) des Stücks, wobei der Schweißstrom unterbrochen wird, sobald eine vorgegebene Eindrückung erreicht ist.

FIG.1.

FIG.2.

FIG.3.

# FIG.4.

FIG.5.

# FIG.6.

# FIG.7.

FIG.9.

FIG.8.